# EUROPEAN PATENT SPECIFICATION

(11) **EP 2 694 258 B1**
(45) Date of publication and mention of the grant of the patent: **14.10.2015**
(21) Application number: 12768229.2
(22) Date of filing: 05.04.2012
(51) Int. Cl.: B26D 1/36, B26D 1/62, B26D 3/28, A23N 7/02, B26D 3/26

(54) **CUTTING ROLL ELEMENT FOR TREATING VEGETABLES, METHOD FOR MANUFACTURING A CUTTING ELEMENT, SHAPING ROLL, PEELING ROLL, PROCESSING DEVICE AND METHOD FOR PROCESSING VEGETABLES**
SCHNEIDEWALZENELEMENT ZUR BEHANDLUNG VON GEMÜSE, VERFAHREN ZUR HERSTELLUNG DES SCHNEIDEELEMENTS, FORMWALZE, ABZIEHWALZE, VERARBEITUNGSVORRICHTUNG UND VERFAHREN ZUR VERARBEITUNG VON GEMÜSE
ÉLÉMENT DE ROULEAU DE COUPE POUR TRAITER DES LÉGUMES, MÉTHODE POUR FABRIQUER UN ÉLEMENT DE DÉCOUPE, ROULEAU POUR FORMATION, ROULEAU POUR ENLEVER LA PEAU, DISPOSITIF ET MÉTHODE POUR PROCESSER LES LÉGUMES

(30) Priority: 07.04.2011 FI 20115332
(43) Date of publication of application: 12.02.2014
(73) Proprietor: Forsfood Group Oy, 61800 Kauhajoki (FI)
(72) Inventor: LINDFORS, Heikki, FI-61800 Kauhajoki (FI)
(74) Representative: Berggren Oy Ab
(86) International application number: PCT/FI2012/050350
(87) International publication number: WO 2012/136896

(56) References cited:
- GB-A- 191 081
- US-A- 1 395 426
- US-A- 3 255 646
- US-A- 4 042 183
- US-A1- 2010 043 236

## Description

The invention relates to a cutting roll element for processing vegetables. The invention relates also to a vegetable shaping roll and peeling roll, featuring one or a plurality of such cutting roll elements. The intention relates further to a vegetable processing device and its use.

The processing of vegetables is performed by using rotatable rolls, having their surfaces provided with treatment zones for shaping the vegetables and. This treatment zone generally consists of coarse aggregate bonded to the surface of a processing roll, or the roll surface has been carved for shaped patterns. Mechanically, however, these solutions are not particularly durable. Another problem with prior known processing rolls is that vegetables produced thereby are often relatively irregular on their surface, whereby the vegetables do not have best possible preservability. The irregular or dull surface layer is also aesthetically undesirable.

Document US 2010/0043236 discloses a cutting roll element for vegetables, which has a cutting blades rotatable around the tool axis which are successive relative to the rotating direction and which cut the surface of vegetables and further comprising vanes used for operations such as removing eyes from potatoes.

### General description of the invention

The invention is defined in claims 1, 8 and 9.

What has been invented now is a cutting roll element, which enables producing vegetables with a particularly high quality surface.

In order to achieve this objective, the invention is characterized by the features presented in the independent claims. Other claims present a few preferred embodiments of the invention.

The cutting roll element according to the invention is provided with a cutting surface rotatable around its axis. The cutting surface of such a cutting roll element is provided at least in one location with cutting blades, which are successive relative to the rotating direction and which cut the surface of vegetables, and with pickup rolls lifting vegetables up and controlling the cutting of vegetables for shaping and/or peeling the vegetables to be cut. The cutting roll element material may preferably be RST, it can be tempered and/or it can also be coated. The cutting roll elements according to the invention enable processing vegetables in a particularly precise and controlled manner. The surface quality of obtained vegetables is particularly high when compared to prior known solutions. The capacity of such an element is high and its service life is long. The operating reliability is also improved, since jamming of the equipment etc. can be reduced as a result of the more careful and consistent operation. The invention relates both to such an element and to its manufacture.

The cutting roll is particularly safe in use, since during the processing of vegetables it may not release any substance that would be harmful to machines or would constitute a safety hazard or an aesthetic drawback during the consumption of vegetables. The cutting roll washing can also be carried out very effectively and hygienically and the roll maintenance and surface renewal are also technically simple and quick operations. Hence, using the cutting roll improves substantially the processing of vegetables as compared to traditional rolls.

The modular element structure enables making the processing roll particularly flexible in terms of its design. The modularity can be utilized in manufacturing and assembling the roll. It may be advantageously exploited in use, as well. It is possible e.g. to assemble elements for combinations suitable for each purpose. Hence, e.g. the treatment zone at a leading end can be replaced with another and, respectively, the trailing end part/parts can be replaced with other parts. The modular roll may comprise e.g. two or three element units which can be swapped preferably for a variety of combinations. The modularity is particularly beneficial e.g. in applications, in which the roll parts experience unequal wearing rates. In this case, e.g. a more rapidly wearing element can be replaced more frequently than a more slowly wearing and less maintenance demanding component.

The cutting angle of a cutting blade may vary, being possibly negative, zero, or positive according to a processed vegetable and a desired end result. Accordingly, different angles enable obtaining quite a diversity of cutting roll elements. This provides highly diverse applications for the invention.

According to the invention, the height of a cutting blade with respect to the cutting element's continuous surface of revolution is 2-20 mm. According to the invention, the height difference between a cutting blade and a pickup blade with respect to the cutting element's continuous surface of revolution and/or axis is 0,02-1,0 mm. It is with the pickup blade that the infeed is controlled in a particularly precise manner. A benefit resulting from this is that the processing of vegetables can be planned and conducted in a quite highly adjustable manner and with high capacity. The pickup roll improves capacity by preventing a vegetable/vegetable mass from jamming the cutting blade and a space between the actual rolls. Thus, the cutting blade does not get "stuck" in the vegetable, either. One blade can be used at various speeds for various raw materials. The height difference can also be adjusted subsequently, e.g. by sharpening the blades to a height difference which is other than the original. Hence, the height difference can be made adjustable. Both the cutting blade and the pickup blade are modifiable.

According to one aspect of the invention, the cutting roll element has its surface provided with cutting blades at a pitch of 1--50 mm, such as e.g. at a pitch of 5-10 mm. The pitch is used to manipulate capacity. This variable can be further used to make a difference in the properties and quality of a resulting product and, vice versa, it is possible to select values best suitable for a certain raw material.

According to one aspect of the invention, the cutting angle of cutting blades relative to the rotating direction is oblique at least in one direction, whereby the blade cuts in a sort of slicing fashion. This has an essential effect on capacity. Hence, it can also be oblique e.g. in two directions (+,-) (-,+). The obliquity and cutting range can be preferably adapted to comply with the surface of a vegetable being processed, whereby a particularly good cutting result is obtained. The inclination of blades can also be varied for a quite versatile application of the invention. The inclination can be varied in one or several cutting roll elements. The obliquities and inclinations preferably enable producing also asymmetrical products.

The invention relates also a shaping roll, which is characterized by one or more cutting roll elements of the invention, as well as optionally by one or more shaping elements and/or cutting elements. This enables assembling quite diversified shaping rolls for versatile vegetable processing. By means of a controlled cutting blade and pickup blade, it is possible to obtain exquisitely shaped and high surface quality vegetables. The use of shaping elements and/or cutting elements enables a further diversification of the shaping roll.

In this application, the meaning of being optional is that something can be totally omitted, or presented alternatives can be chosen for implementation.

The invention also relates to a skin peeling roll, which is characterized by one or more cutting roll elements of the invention, as well as optionally by one or more coated, knurled, injection molded or electrolytically treated, etched and/or blasted peeling roll elements. Hence, these optional rolls may or may not be present. Accordingly, it is possible to assemble quite diverse peeling rolls for treating vegetables in a versatile manner. Preferably, the rest of the element is also of a nature not capable of releasing any substance that would be harmful to machines or would constitute a safety hazard or an aesthetic drawback during the consumption of vegetables. The use of such elements improves substantially the processing of vegetables as compared to traditional rolls. The cutting unit is particularly effective in the process of peeling the skin of vegetables. The efficient and consistent processing, which is achieved by an apparatus of the invention which includes a treatment zone provided with a cutting unit, reduces the loss of vegetable in the processing, thus improving essentially the efficiency and quality of vegetable processing.

Furthermore, the invention relates to a vegetable processing device, which is characterized by one or more shaping rolls and/or peeling rolls of the invention, as well as optionally by one or more pickup rolls. This enables assembling quite highly diverse processing devices for a versatile treatment of vegetables. In addition, the device can be provided with other components necessary in each application, such as an inlet, sprayers, fans, washers, conveyors, guides, guards and outlets, as well as with adjustment and measurement elements.

According to one aspect of the invention, the rotating speed of a cutting element is adjustable over the range of 1000 to 3000 rpm. Such speeds enable obtaining particularly high quality products and making the actual device reliable in operation. The applied rotating speed depends on the product and desired end result. It is also possible to use one and the same blade at various speeds for processing various raw materials.

According to one aspect of the invention, vegetables are processed, such as peeled, ground, diced and/or polished, with one or more processing devices of the invention. However, applications of the invention are not limited to these presented alternatives, but it can be used more extensively in various vegetable pretreatment, treatment and finishing processes.

### Specific description of the invention

A few embodiments of the invention will now be described in detail with reference to the accompanying drawings.
Fig. 1 shows a cutting blade and a pickup blade for a cutting roll element
Fig. 2 shows a shaping blade provided with various cutting roll elements.

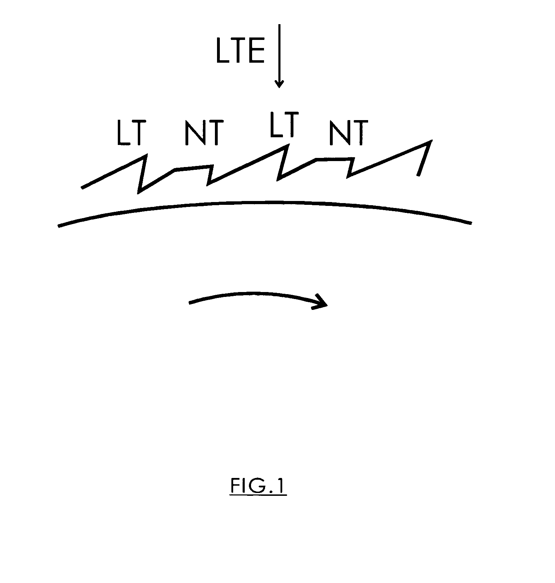

Fig. 1 depicts a piece of a clockwise rotating cutting roll element LTE with alternating cutting blades LT and pickup blades NT.

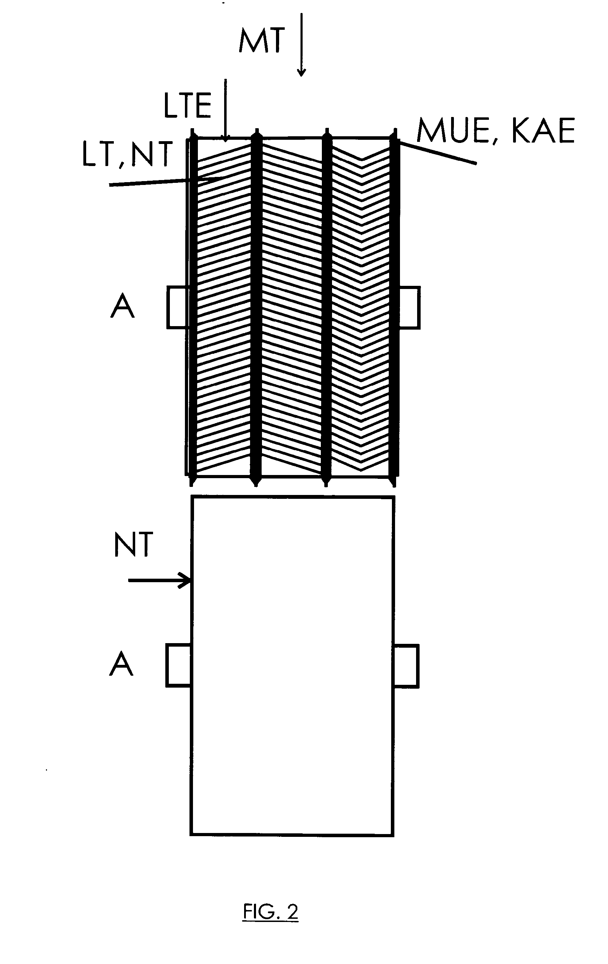

Fig. 2 illustrates a shaping blade MT, which by way of example includes three separate (different cutting angle) cutting roll elements LTE, having their edges provided with shaping elements MUE and chopping elements KAE for shaping a vegetable. The shaping roll MT and the cutting roll elements LTE/shaping elements MUE/chopping elements KAE are rotating relative to their axis A, and the processing device includes also a pickup roll NT for lifting up a vegetable to be shaped. The distance between the shaping roll MT and the pickup roll NT provides a means of adjusting the diameter of a vegetable to be shaped.

## Claims

1. A cutting roll element for vegetables, which has a cutting surface rotatable around its axis (A), **characterized in that** the cutting surface of a cutting roll element (LTE) is in at least one location provided with cutting blades (LT), which are successive relative to the rotating direction and which cut the surface of vegetables, and with pickup rolls (NT) lifting vegetables up and controlling the cutting of vegetables for shaping and/or peeling a vegetable to be cut, and that and the pickup blade (NT) relative to the continuous surface of revolution and/or the axis (A) of the cutting element (LTE) is 0,02 - 1,0 mm and the height of the cutting blade (LT) relative to the continuous surface of revolution of the cutting element (LTE) is 2 - 20 mm.

2. A cutting roll element for vegetables according to claim 1, **characterized in that** the cutting roll element (LTE) has its surface provided with cutting blades (LT) at a pitch of 1 - 50 mm.

3. A cutting roll element for vegetables according to claim 1 or 2, **characterized in that** the cutting angle of the cutting blades (LT) relative to the rotating direction is oblique at least in one direction.

4. A cutting roll element for vegetables according to claim 4, **characterized in that** cutting angle of cutting blades (LT) relative to the rotating direction is oblique at least in two directions.

5. A shaping roll, **characterized by** one or more cutting roll elements (LTE) according to any of claim 1 to 4, as well as optionally by one or more shaping elements (MUE) and/or chopping elements (KAE).

6. A peeling roll, **characterized by** one or more cutting roll elements (LTE) according to any of claim 1 to 4, as well as optionally by one or more coated, knurled, etched, injection molded or electrolytically treated and/or blasted peeling roll elements.

7. A processing device for vegetables, **characterized by** one or more shaping rolls (MT) and/or peeling rolls according to claim 5 or 6, as well as optionally by one or more pickup rolls (NT).

8. A method for processing vegetables, **characterized in that** vegetables are processed, such as peeled, ground, cut and/or polished, with one or more processing devices according to claim 7.

9. A method for manufacturing a vegetable cutting roll element, which is rotatable around its axis (A), **characterized in that** the cutting surface of a cutting roll element (LTE) is provided at least in one location with cutting blades (LT), which are successive relative to the rotating direction and which cut the surface of vegetables, and with pickup blades (NT) controlling the cutting of vegetables for shaping and/or peeling the vegetables, and that and the pickup blade (NT) relative to the continuous surface of revolution and/or the axis (A) of the cutting element (LTE) is provided to be 0,02 - 1,0 mm and the height of the cutting blade (LT) relative to the continuous surface of revolution of the cutting element (LTE) is provided to be 2-20 mm.

## Patentansprüche

1. Rollschneideelement für Gemüse, das eine Schneideoberfläche aufweist, die um ihre Achse (A) drehbar ist, **dadurch gekennzeichnet, dass** sich die Schneideoberfläche eines Rollschneideelementes (LTE) an wenigstens einer Stelle befindet, die mit Schneideklingen (LT) zur Verfügung gestellt ist, welche bezüglich der Rotationsrichtung sukzessiv sind und welche die Oberfläche von Gemüse schneiden, und mit Aufnahmerollen (NT), welche Gemüse anheben und das Schneiden des Gemüses zur Formung und/oder zum Schälen eines zu schneidenden Gemüses steuern, und dass die Aufnahmeklinge (NT) bezüglich der durchgängigen Rotationsfläche und/oder der Achse (A) des Schneideelementes (LTE) 0,02 - 1,00 mm beträgt und die Höhe der Schneideklinge (LT) bezüglich der durchgängigen Rotationsfläche des Schneideelementes (LTE) 2 - 20 mm beträgt.

2. Rollschneideelement für Gemüse nach Anspruch 1, **dadurch gekennzeichnet, dass** an der Oberfläche des Rollschneidelementes (LTE) Schneideklingen (LT) mit einer Höhe von 1 - 50 mm zur Verfügung gestellt sind.

3. Rollschneideelement für Gemüse nach Anspruch 1 oder 2, **dadurch gekennzeichnet, dass** der Schneidewinkel der Schneideklingen (LT) bezüglich der Rotationsrichtung wenigstens in eine Richtung schräg ist.

4. Rollschneidelement für Gemüse nach Anspruch 4, **dadurch gekennzeichnet, dass** der Schneidewinkel der Schneideklingen (LT) bezüglich der Rotationsrichtung in wenigstens zwei Richtungen schräg ist.

5. Formrolle, **gekennzeichnet durch** eines oder mehrere Rollschneidelemente (LTE) nach einem der Ansprüche 1 bis 4, ebenso wie optional **durch** eines oder mehrere Formungselemente (MUE) und/oder Schneideelemente (KAE).

6. Schälrolle, **gekennzeichnet durch** eines oder mehrere Rollschneideelemente (LTE) nach einem der Ansprüche 1 bis 4, ebenso wie optional **durch** eines oder mehrere beschichtete, gerändelte, geätzte, spritzgegossene oder elektrolytisch behandelte und/oder gestrahlte Schälrollenelemente.

7. Verarbeitungsvorrichtung für Gemüse, **gekennzeichnet durch** eine oder mehrere Formrollen (MT) und/oder Schälrollen nach Anspruch 5 oder 6, ebenso wie optional **durch** eine oder mehrere Aufnahmerollen (NT).

8. Verfahren zur Verarbeitung von Gemüse, **dadurch gekennzeichnet, dass** Gemüse verarbeitet wird, wie zum Beispiel geschält, gemahlen, geschnitten und/oder poliert, mit einer oder mehreren Verarbeitungsvorrichtungen nach Anspruch 7.

9. Verfahren zur Herstellung eines Gemüserollschneidelementes, das um seine Achse (A) rotierbar ist, **dadurch gekennzeichnet, dass** sich die Schneideoberfläche eines Rollschneideelementes (LTE) an wenigstens einer Stelle befindet, die mit Schneideklingen (LT) zur Verfügung gestellt ist, welche bezüglich der Rotationsrichtung sukzessiv sind und welche die Oberfläche von Gemüse schneiden, und mit Aufnahmerollen (NT), welche Gemüse anheben und das Schneiden des Gemüses zur Formung und/oder zum Schälen eines zu schneidenden Gemüses steuern, und dass die Aufnahmeklinge (NT) bezüglich der durchgängigen Rotationsfläche und/oder der Achse (A) des Schneideelementes (LTE) 0,02 - 1,00 mm beträgt und die Höhe der Schneideklinge (LT) bezüglich der durchgängigen Rotationsfläche des Schneideelementes (LTE) 2 - 20 mm beträgt.

## Revendications

1. Elément à rouleau de coupe pour légumes, qui comporte une surface de coupe qui peut tourner autour de son axe (A), **caractérisé en ce que** la surface de coupe d'un élément à rouleau de coupe (LTE) est pourvue à au moins un endroit de lames de coupe (LT) qui se succèdent par rapport au sens de rotation et qui coupent la surface des légumes et de rouleaux de récupération (NT) soulevant les légumes et contrôlant la coupe des légumes pour façonner et/ou éplucher un légume à couper, et que ceux-ci et la lame de récupération (NT), par rapport à la surface continue de révolution et/ou à l'axe (A) de l'élément de coupe (LTE), se trouvent à 0,02 à 1,00 m et que la hauteur de la lame de coupe (LT) par rapport à la surface continue de révolution de l'élément de coupe (LTE) est de 2 à 20 mm.

2. Elément à rouleau de coupe pour légumes selon la revendication 1, **caractérisé en ce que** l'élément à rouleau de coupe (LTE) a une surface dotée de lames de coupe (LT) suivant un pas de 1 à 50 mm.

3. Elément à rouleau de coupe pour légumes selon la revendication 1 ou 2, **caractérisé en ce que** l'angle de coupe des lames de coupe (LT) par rapport au sens de rotation est oblique au moins dans un sens.

4. Elément à rouleau de coupe pour légumes selon la revendication 4, **caractérisé en ce que** l'angle de coupe des lames de coupe (LT) par rapport au sens de rotation est oblique au moins dans deux sens.

5. Rouleau de façonnage, **caractérisé par** un ou plusieurs éléments à rouleau de coupe (LTE) selon l'une quelconque des revendications 1 à 4, de même qu'en option par un ou plusieurs éléments de façonnage (MUE) et/ou éléments de hachage (KAE).

6. Rouleau d'épluchage, **caractérisé par** un ou plusieurs éléments à rouleaux de coupe (LTE) selon l'une quelconque des revendications 1 à 4, de même qu'en option par un ou plusieurs éléments à rouleaux d'épluchage plaqués, moletés, gravés, moulés par injection ou ayant subi un traitement électrolytique et/ou soufflés.

7. Dispositif de traitement pour légumes, **caractérisé par** un ou plusieurs rouleaux de façonnage (MT) et/ou rouleaux d'épluchage selon la revendication 5 ou 6, de même qu'en option par un ou plusieurs rouleaux de récupération (NT).

8. Procédé de traitement de légumes, **caractérisé en ce que** les légumes sont traités, c'est-à-dire épluchés, meulés, coupés et/ou polis avec un ou plusieurs dispositifs de traitement selon la revendication 7.

9. Procédé de fabrication d'un élément à rouleau de coupe pour légumes qui peut tourner autour de son axe (A), **caractérisé en ce que** la surface de coupe d'un élément à rouleau de coupe (LTE) est pourvue à au moins un endroit de lames de coupe (LT) qui se succèdent par rapport au sens de rotation et qui coupent la surface des légumes et de rouleaux de récupération (NT) contrôlant la coupe de légumes pour façonner et/ou éplucher les légumes, et que ceux-ci et la lame de récupération (NT), par rapport à la surface continue de révolution et/ou à l'axe (A) de l'élément de coupe (LTE), se trouvent à 0,02 à 1,00 m et que la hauteur de la lame de coupe (LT) par rapport à la surface continue de révolution de l'élément de coupe (LTE) est de 2 à 20 mm.
